# EUROPÄISCHE PATENTSCHRIFT

(11) **EP 2 916 106 B1**
(45) Veröffentlichungstag und Bekanntmachung des Hinweises auf die Patenterteilung: **13.06.2018**
(21) Anmeldenummer: 15157533.9
(22) Anmeldetag: 04.03.2015
(51) Int. Cl.: G01C 21/20, G06T 7/70

(54) **Verfahren zur Positions- und Lagebestimmung mittels virtueller Referenzbilder**
Method for determining position and attitude by means of virtual reference images
Procédé de détermination de position et d'emplacement à l'aide d'images virtuelles de référence

(30) Priorität: 05.03.2014 DE 102014003284
(43) Veröffentlichungstag der Anmeldung: 09.09.2015
(73) Patentinhaber: Airbus Defence and Space GmbH, 82024 Taufkirchen (DE)
(72) Erfinder: Ahrns, Ingo, 28357 Bremen (DE); Haskamp, Christoph, 28201 Bremen (DE)
(74) Vertreter: Marschall, Stefan

(56) Entgegenhaltungen:
- EP-A2- 2 687 817
- US-A1- 2011 026 832
- US-A1- 2013 230 214
- REID D: "A real time implementation of a passive optical Terrain Navigation system", 59TH INTERNATIONAL ASTRONAUTICAL CONGRESS 2008, IAC 2008; 20080929 TO 20081003; GLASGOW, UK, INTERNATIONAL ASTRONAUTICAL FEDERATION, US, Bd. 8, 29. September 2008 (2008-09-29), - 3. Oktober 2008 (2008-10-03), Seiten 4923-4935, XP008176920, ISBN: 978-1-61567-160-1
- TALLURI R ET AL: "IMAGE/MAP CORRESPONDENCE FOR MOBILE ROBOT SELF-LOCATION USING COMPUTER GRAPHICS", IEEE TRANSACTIONS ON PATTERN ANALYSIS AND MACHINE INTELLIGENCE, IEEE COMPUTER SOCIETY, USA, vol. 15, no. 6, 1 June 1993 (1993-06-01), pages 597-601, XP000369962, ISSN: 0162-8828, DOI: 10.1109/34.216729

## Beschreibung

Die Erfindung betrifft Verfahren zur Positions- und Lagebestimmung einer Kamera gegenüber einer topografischen Karte mittels virtueller Referenzbilder.

Für die Erkundung extremer Umgebungen, beispielsweise fremde Planeten oder auch Tiefseeregionen, werden verstärkt autonom agierende Fahrzeuge eingesetzt, die sich in ihrer Umgebung selbst lokalisieren müssen, um einen vorausgeplanten Zielort erreichen zu können. Eine Möglichkeit besteht dabei in einem Verfahren der eingangs genannten Art, das auf einer kamerabasierten Navigation anhand existierender topografischer Karten beruht. Derartige topografische Karten existieren auch für bisher nicht ausreichend erkundete Regionen, wie zum Beispiel den Meeresboden der Tiefsee oder planetare Oberflächen wie die von Mond und Mars. Insbesondere für den Mond und den Mars existieren aufgrund in der Vergangenheit durchgeführter Kartografierungsmissionen der amerikanischen und japanischen Raumfahrtagenturen NASA und JAXA detaillierte topografische Karten des gesamten Mondes und auch für den Mars, die sowohl Fotografien als auch Höhenreliefs beinhalten, die mittels Stereo oder Laserabstandsmessungen gewonnen wurden. Die Qualität des Kartenmaterials ist sehr hoch und geht insbesondere für Regionen wie die polaren Regionen des Mondes bis herunter zu einer Auflösung von einigen Metern.

Ein Landefahrzeug, das einen vorgegebenen Ort präzise treffen soll, muß während des Landevorganges seine Position und seine Lage ständig beobachten, um Abweichungen von einer geplanten Bahn korrigieren zu können. Da es außerhalb der Erde keine gängigen Navigationssysteme gibt, muss die Navigation anderweitig erfolgen. Bei einer angestrebten Genauigkeit von wenigen hundert Metern ist auch eine Navigation durch RADAR-Systeme von der Erde aus nicht möglich, und eine sichtgestützte Navigation anhand bekannter Merkmale auf der Planetenoberfläche ist die einzig verbleibende Möglichkeit. Dabei besteht die Herausforderung darin, bei der Abbildung einer planetaren Oberfläche mit Hilfe einer Kamera Merkmale zu extrahieren und wiederzuerkennen, deren räumliche Lage in Bezug zu einem Referenzsystem bekannt sind. Aus der Korrespondenz von zweidimensionalen Orten im Kamerabild und dreidimensionalen Orten im Referenzsystem lässt sich dann die Position und Lage des Kamerasystems bezüglich des Referenzsystems bestimmen.

Ein Grundprinzip bereits bekannter Verfahren zur Navigation anhand von Karten besteht darin, dass mit Hilfe eines Kamerasystems Bilder des überflogenen Geländes aufgenommen werden und dass anhand der aufgenommenen Kamerabilder visuelle Merkmale extrahiert werden, die in dem für das Gelände verfügbaren Kartenmaterial wieder erkannt werden können. Aus der Zuordnung der zweidimensionalen Position der extrahierten Merkmale im Kamerabild und den 3D-Koordinaten der wiedererkannten Merkmale im Kartenmaterial zueinander kann dann die eigene Position und Lage ermittelt werden. Im Falle von Raumfahrzeugen wurde hierzu bereits vorgeschlagen, sich auf eine Bestimmung ihrer Position zu beschränken, da ihre Lage mit Hilfe von Sternenkameras genauer vermessen werden kann. Unterschiede zwischen den verschiedenen bekannten Verfahren bestehen vorwiegend in der Wahl der Merkmale, die aus den Kamerabildern extrahiert werden und die in dem Kartenmaterial wiederzuerkennen sind.

Ein im Wesentlichen für die Navigation auf der Mondoberfläche entwickeltes Verfahren, das in dem Artikel "Advanced Optical Terrain Absolute Navigation for Pinpoint Lunar Landing" von M. Mammarella, M. A. Rodrigalvarez, A. Pizzichini und A. M. Sanchez Montero in "Advances in Aerospace Guidance Navigation and Control", 2011, auf den Seiten 419-430 beschrieben wird, basiert auf der Erkennung von Kratern. Hierbei wird mit einem speziell entwickelten Bildverarbeitungsoperator das Kamerabild hinsichtlich elliptisch erscheinender und mit charakteristischem Schattenwurf versehener Muster im Bild untersucht und die Krater werden im Bild extrahiert. Gleichzeitig werden Krater in topografischen Karten, sogenannten digital elevation maps (DEM), der Mondoberfläche bestimmt und ihre 3D-Koordinaten in Mondkoordinaten hinterlegt. Die Zuordnung der Krater der Karte zu den im Kamerabild detektierten Kratern erfolgt anschließend im Wesentlichen durch eine Analyse der Kraterkonstellation. Durch die Erkennung von Kratern bei unterschiedlichen Beleuchtungsbedingungen ist dann eine topografische Karte für die Lösung der Navigationsaufgabe ausreichend.

Bei einem als "LandStel" bezeichneten Verfahren, das unter anderem in dem Artikel "Vision-Based Absolute Navigation for Descent and Landing" von B. Van Pham, S. Lacroix und M. Devy im "Journal of Field Robotics", Seiten 627-647, Band 29, Issue 4, July 2012, beschrieben ist, wird keine Kratererkennung, sondern ein Detektor markanter Punkte im Kamerabild verwendet, der auch als Harris-Operator bezeichnet wird. Um skalierungsinvariant zu sein, wird dabei eine Höheninformation, beispielsweise von einem Altimeter, verwendet. Die Harris-Merkmale werden dann innerhalb eines skalierten Bildes berechnet, woraus eine Skalierungsinvarianz folgt, ohne den Berechnungsaufwand eines sogenannten SIFT-Operators, wie er in dem Artikel "Distinctive Image Features from Scale-Invariant Keypoints" von David G. Lowe in der Zeitschrift "International Journal of Computer Vision", Band 60, Nr. 2, Seiten 91-110, 2004, beschrieben ist, zu benötigen. Als Merkmale werden bei diesem bekannten Verfahren Konstellationen von Harris-Merkmalen bezeichnet, die in einen rotationsinvarianten Merkmalsvektor überführt werden. Diese Merkmalsvektoren werden anschließend zur Erkennung von Merkmalen zwischen der Karte und dem aktuellen Kamerabild verwendet. Die Karte beinhaltet dabei ein Foto des Geländes sowie eine topografische Karte, um die 3D-Koordinaten der korrespondierenden Merkmale zu ermitteln.

Bei einem weiteren bekannten Verfahren werden die Merkmale mit Hilfe des sogenannten SIFT-Merkmalsoperators ermittelt und es werden ebenfalls Merkmale zwischen Fotografie und aktuellem Kamerabild verglichen. Die 3D-Daten werden dabei einer topografischen Karte entnommen. Bei einem anderen bekannten Verfahren werden kleine Bildausschnitte um bestimmte Punkte extrahiert, die mittels Korrelationsoperatoren in Karten des Geländes wiedererkannt werden sollen.

Neben diesen bildbasierten Ansätzen sind auch bereits Verfahren bekannt geworden, die Tiefendaten für Navigationszwecke vorschlagen und die die Daten eines LIDARs (Light Detection and Ranging) zugrundelegen.

Den bildbasierten Ansätzen ist gemeinsam, dass entweder versucht wird, beleuchtungsunabhängige Operatoren zu entwickeln, wie sie der kraterbasierte Ansatz für sich beansprucht, oder aber dass Karten verwenden werden, die bereits ähnliche Beleuchtungsbedingungen aufweisen wie die Bilder, die zur Navigation zu erwarten sind.

Daneben sind auch bereits konkrete Verfahren für die Landung auf Himmelskörpern bekannt geworden. So beschreibt die DE 10 2010 051 561 A1 ein System zur automatisierten Landung von unbemannten Flugkörpern, das die Existenz einer Bodeneinheit voraussetzt. Die DE 10 2009 036 518 A1 befasst sich mit der Durchführung des Landevorganges eines Raumfahrt-Flugkörpers und beschreibt dabei die für die Durchführung des Landevorganges erforderliche Aktuatorik. Weiterhin befasst sich die DE 10 2008 064 712 B4 mit einer sensorgestützten Landehilfseinrichtung zwischen Helikoptern und einer Landeplatform. Die DE 195 21 600 A1 schlägt ein bildgestütztes Navigationssystem für die automatische Landung vor, welches darauf basiert, das Landegebiet mit künstlichen Marken auszustatten. Auch die DE 39 39 731 C2 geht davon aus, dass das Landegebiet mit Hilfsmarken ausgestattet ist, und schlägt zu dem vor, für die Landenavigation flächige Tiefensensoren, wie Laserscanner oder RADAR, zu verwenden. Schließlich schlägt auch die DE 21 26 688 A die Verwendung von sichtbaren Marken in einer Bodenstation vor. Lediglich in der DE 31 10 691 C2 wird ein Navigationssystem für einen Marschflugkörper vorgestellt, das anhand vorhandenen Kartenmaterials und eines am Fluggerät verfügbaren aktiven Sensors, beispielsweise eines Lasermessstrahles, der die Entfernung und die Intensität akquiriert, Impulszüge aufnimmt und diese mit Impulszügen vergleicht, die aus Luftbildern manuell oder automatisch ermittelt werden. Weiterhin wird dort vorgeschlagen, mehrere Messstrahlen zu verwenden. Druckschrift EP 2 687 817 A2 offenbart ein Navigationsverfahren, bei dem aktuelle und vorab gespeicherte Karten, in denen jeweils Merkmalsränder gekennzeichnet sind, als grob- und als feinaufgelöste Versionen meinander verglichen werden. Aus dem Aufsatz "Image/Map Correspondence for Mobile Robot Self-Location Using Computer Graphics" von Raj Talluri und J. K. Aggarwal ist ferner eine Positionsabschätzung für einen Roboter, der eine Kamera aufweist, die verschwenkt und geneigt werden kann, bekannt. Hierzu werden Linienkonturen des Horizonts ermittelt und Höhen abgeschätzt, die mit tatsächlichen Höhen verglichen werden, um Positionen der Kamera auszuschließen.

Aufgabe der Erfindung ist es, ein Verfahren der eingangs genannten Art so auszubilden, dass es eine sichtbasierte Navigation und die Verwendung computergrafischer Methoden zur Erzeugung einer Referenzdatenbank ermöglicht, die es erlaubt, einen Merkmalsextraktor auch dann zu verwenden, wenn dieser nicht beleuchtungsunabhängig ist oder unter Beleuchtungsvariation nicht robust genug ist.

Die Erfindung löst diese Aufgabe durch ein Verfahren, das in einem Offline-Prozess aus bestehenden topografischen Karten eine Merkmalsdatenbank erstellt und das diese anschließend in einem Online-Prozess zur Erkennung gesichteter Merkmale verwendet. Dazu werden erfindungsgemäß mit computergrafischen Methoden virtuelle Referenzbilder einer erwarteten Situation erzeugt, die mittels einer Merkmalsextraktion analysiert werden, und aus diesen wird ein Merkmalskatalog aus sichtbasierten Merkmalsvektoren und den dazugehörigen 3D-Koordinaten der lokalisierten Merkmale abgeleitet. Diese Daten werden in Form einer Modelldatenbank in einem Flugsystem hinterlegt und es erfolgt dann eine Navigation in der Nähe einer Referenztrajektorie für eine geplante Beleuchtungssituation.

Die Verwendung von kompletten Bildern und passiven Sensoren, wie einer Kamera, und die bei der Erfindung zum Einsatz gelangenden Techniken zur Merkmalsextraktion sind dabei weder in der Druckschrift DE 31 10 691 C2 beschrieben noch sind sie aus einem der anderen vorangehend diskutierten Verfahren bekannt.

Die Erfindung macht dabei von der Tatsache Gebrauch, dass für viele mögliche Anwendungsfälle, wie beispielsweise für einen planetaren Landevorgang, Ort und Zeit des geplanten Überfluges bekannt sind. Ist zudem eine genaue topografische Karte des Überfluggebietes bekannt, so kann mit Hilfe des Verfahrens nach der Erfindung mittels computergrafischer Methoden anhand des Kartenmaterials und mit der Kenntnis der geplanten Überflugtrajektorie sowie dem geplanten Überflugzeitpunkt eine computergrafisch generierte Erwartungshaltung dessen errechnet werden, was die Kamera voraussichtlich abbilden wird. Auf diese Weise kann mit dem erfindungsgemäßen Verfahren in der Vorbereitung des Überfluges eine virtuelle Bildsequenz errechnet werden, zu der zusätzlich zu jedem Pixel im Bild eine korrespondierende 3D-Koordinate im Referenzkoordinatensystem hinterlegt wird.

Die Vorberechnung einer erwarteten Bildsequenz stellt dabei einen Offline-Prozess dar, der zum erfindungsgemäß vorgesehenen Aufbau eines Merkmalskataloges dient, der während des tatsächlichen Überfluges zur Navigation verwendet wird. Die Grundidee des erfindungsgemäßen Verfahrens besteht daher in einer Aufteilung des gesamten Prozesses in der Weise, dass zunächst eine Merkmalsdatenbank erstellt wird und dass die so vorab erstellte Merkmalsdatenbank dann während des Flugbetriebes in einer Online-Anwendung eingesetzt wird. Obwohl das Verfahren nach der Erfindung Methoden bereits bestehender Verfahren verwendet, besteht seine Innovation darin, durch eine Verwendung computergrafischer Methoden zur Vor- und Aufbereitung des Kartenmaterials eine Vielzahl bereits existierender Merkmalsextraktoren zu verwenden, die an sich den Nachteil aufweisen, nicht beleuchtungsinvariant zu sein. Erst das Verfahren nach der Erfindung ermöglicht eine Verwendung bereits etablierter und zum Teil sehr robuster Methoden zur Merkmalsextraktion und Merkmalserkennung. Dieses hat beispielsweise für den Anwendungsfall einer Mondlandung gegenüber einer Kratererkennung den Vorteil, dass wirklich punktgenaue Merkmale verwendet werden, die im Bild und in der Karte sehr gut lokalisierbar sind und damit gegenüber einem kraterbasierten Ansatz eine deutliche Steigerung an erreichbarer Genauigkeit bieten. Die geringere erzielbare Genauigkeit eines kraterbasierten Ansatzes liegt dabei vor allem in dem Umstand, dass ein Krater kein regelmäßiger Körper mit scharf umrissenen Strukturen ist und sich daher auch seine Position bezüglich des vorliegenden Kartenmaterials nur ungefähr definieren lässt. Zusätzlich führt bei kraterbasierten Verfahren eine Änderung der Beleuchtungsbedingungen zu einer geringfügigen Verschiebung der detektierten Kraterpositionen, so dass das mit der vorliegenden Erfindung realisierte Verfahren auch für kraterbasierte Verfahren von Vorteil wäre.

Nachfolgend soll das Verfahren gemäß der Erfindung anhand der Zeichnung näher erläutert werden. Es zeigen
- Fig. 1: den prinzipiellen Ablauf des Offline-Prozesses zur Erstellung einer Merkmalsdatenbank,
- Fig. 2: den prinzipiellen Ablauf des Online-Prozesses zur Positions- und Lagebestimmung einer Kamera gegenüber einer Referenzkarte,
- Fig. 3: die Zuordnung von Merkmalen zwischen einem virtuellen Bild und einem realen Bild,
- Fig. 4: die mittlere Positionsgenauigkeit als Ergebnis einer simulierten Testlandung von 100 km bis auf 5 km Höhe anhand realer Bilder einer robotischen Testanlage.
- Fig. 5: die Standardabweichung der Positionierfehler einer simulierten Testlandung von 100 km bis auf 5 km Höhe anhand realer Bilder einer robotischen Testanlage.

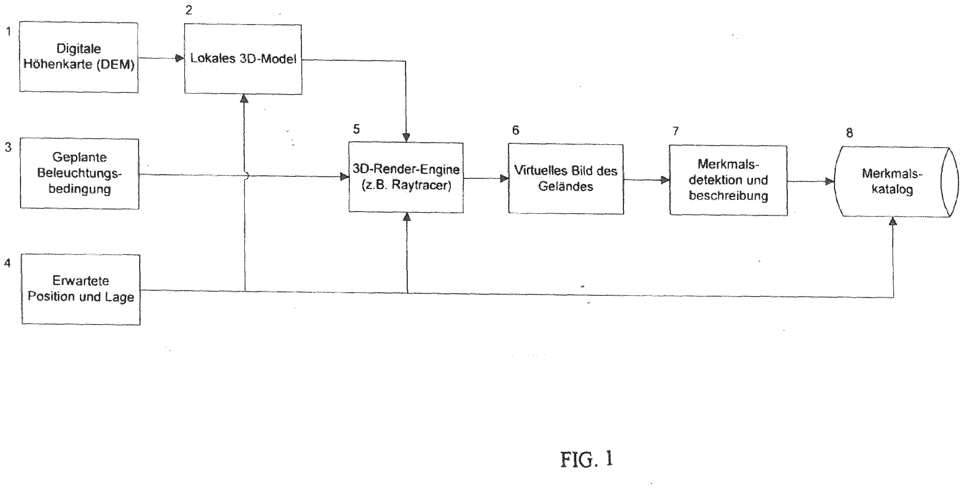

Die in Fig.1 dargestellte Merkmalsgenerierung mit Hilfe computergrafischer Methoden besteht darin, dass anhand eines Geländemodells 1, beispielsweise einer digitalen Höhenkarte (digital elevation map, DEM), des gesamten Überfluggebietes zunächst ein lokales Modell erstellt wird 2, das nur diejenigen Kartendetails enthält, die von der Kamera zu einer prognostizierten Kameraposition und Lage gesehen werden. In Abhängigkeit von den zu erwartenden Ungenauigkeiten hinsichtlich der Position und der Lage während des Abfluges der geplanten Trajektorie wird das lokale Modell dabei leicht vergrößert, um den erwarteten Ungenauigkeiten Rechnung zu tragen. Zu der geplanten Trajektorie wird ein geplanter Zeitpunkt mit einer einhergehenden Beleuchtungsbedingung 3, beispielsweise dem Sonnenstand, dem Stand eines Planeten oder des Mondes usw., vorausgesetzt. Aus dem lokalen Modell und der erwarteten Position 4 und der Lage der Kamera gegenüber dem lokalen Modell 2 und der geplanten Beleuchtungsbedingung 3 wird dann mit Hilfe an sich bekannter computergrafischer Techniken 5, beispielsweise dem sogenannten Ray-Tracing, ein virtuelles Bild 6 der erwarteten Situation erstellt.

Diese Erstellung eines lokalen Modells kann deshalb notwendig sein, als das gesamte zu überfliegende Gebiet möglicherweise eine zu große Datenmenge beinhaltet. Für eine spezielle Kameraposition und Lage wird das lokale Modell zunächst als 3D-Modell 7 repräsentiert und, sofern vorhanden, mit einer sogenannten Albedo-Karte versehen, die die Reflektionseigenschaften der Oberfläche repräsentiert. Dabei sind gegebenenfalls Fehler in der Karte zu korrigieren und Lücken zu interpolieren.

Anhand des ursprünglichen Ausgangskartenmaterials wird dann eine lokale Karte erstellt. Hierbei handelt es sich um Höhenkarten, deren Grauwerte unterschiedlichen Höhen entsprechen. In diesem lokalen Modell kann virtuell eine Kamera an einer erwarteten Position platziert werden und ein virtuelles Bild, sowie eine virtuelle Tiefenkarte kann daraus erstellt werden.

Die Übereinstimmung kann in Abhängigkeit des zur Verfügung stehenden Kartenmaterials so ähnlich sein, dass Bildmerkmale 7, die im virtuellen Bild 6 errechnet wurden, ohne Mühe im realen Kamerabild wiedererkannt werden können. Diese Merkmale werden in einer Datenbank 8 abgelegt und bestehen aus einem Merkmalsvektor (in Abhängigkeit des verwendeten Merkmalsextraktors), sowie den dazugehörigen 3D-Koordinaten im Referenzsystem (beispielsweise Mondkoordinaten).

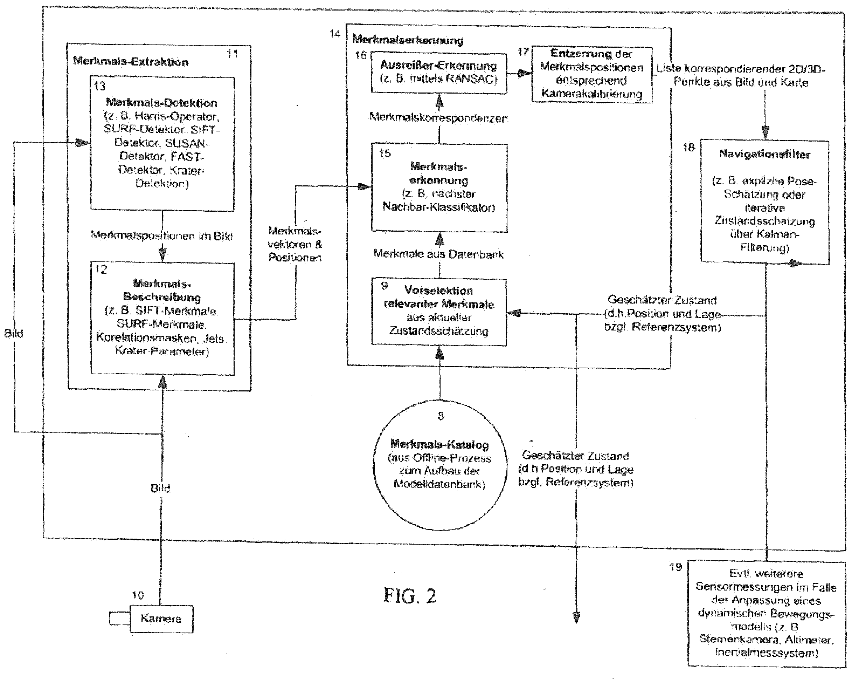

Fig. 2 beschreibt, wie auf Basis der so gewonnenen Merkmalsdatenbank 8 eine Positions- und Lagebestimmung einer Kamera 10 während des Überfluges eines kartierten Geländes durchgeführt werden kann. Die Kamera 10 nimmt dabei in einem festen Takt digitale Bilddaten auf, die von einer Verarbeitungseinheit 11 ausgewertet werden: Ein Merkmalsextraktor 12 detektiert hervorstechende Merkmale im Bild, die jegliche Form eines Merkmalsextraktors beinhalten können, wie beispielsweise SURF, SIFT, Harris, SUSAN, FAST oder auch komplexere Strukturen wie Krater oder LandStel-Merkmale. An den Orten der detektierten Merkmale werden aus dem digitalen Bild ebenfalls Merkmalsvektoren, d.h., lokale Beschreibungen der Orte anhand der Grauwertinformation, bestimmt 13 und verknüpft mit den 2D-Orten der detektierten Stellen im Bild an die Erkennungsstufe 14 weitergereicht. Die Merkmalserkennung 15 nimmt dazu über eine Vorselektion relevanter Merkmale 9 eine Reihe von Merkmalen der Merkmalsdatenbank 8 entgegen und versucht eine Zuordnung zwischen den im Bild gefundenen Merkmalen und den in der Datenbank 8 abgespeicherten Merkmalen herzustellen. Hierzu werden in erster Linie die Merkmalsvektoren verwendet, deren Wiedererkennung beispielsweise durch Nächste-Nachbar-Klassifikatoren durchgeführt werden können. Das Ergebnis ist eine Zuordnung von Merkmalen im Bild und der Datenbank 8, an die die 3D-Koordinaten der Karte geheftet sind. In der nächsten Stufe 16 werden dann mögliche Fehler, sogenannte Ausreißer, der vorgenommenen Zuordnung überprüft und entfernt. Dieses kann beispielsweise durch bekannte Verfahren wie eine RANSAC-Filterung vorgenommen werden. Schließlich werden die 2D-Koordinaten der gefundenen Merkmale gemäß einer für die Kamera 10 vorliegenden intrinsischen Kamerakalibrierung 17 entzerrt, so dass am Ende dieser Verarbeitungsstufe 14 eine Liste korrespondierender 2D- und 3D-Punkte vorliegt.

Für die Merkmalserkennung werden zur Vereinfachung nicht alle in der Merkmalsdatenbank 8 vorliegenden Merkmale mit den in den Bildern gefundenen verglichen, sondern nur diejenigen Merkmale ausgewählt, die nach Berücksichtigung der bisher durchgeführten Positions- und Lageschätzung in Frage kommen können. So kann eine große Anzahl gar nicht sichtbarer Merkmale bereits im Vorfeld ausgeschlossen werden, da sie beispielsweise zu Kartenbereichen gehören, die zu weit entfernt sind. Die Listen korrespondierender 2D-Orte aus dem aktuellen Kamerabild und 3D-Koordinaten aus den Höhenkarten können nun auf zwei Weisen die Position und Lage des Kamerasystems 10 bezüglich der Referenzkarte bestimmt werden 18. Entweder durch ein Optimierungsverfahren, das direkt die Kamera-Position und die Lage bestimmt, oder aber es wird ein iterativer sogenannter Kalman-Filter verwendet, der den Vorteil bietet, noch weitere Messungen anderer Sensoren 19 berücksichtigen zu können. Für die Vorauswahl 9 der relevanten Merkmale im nächsten Zeittakt aus der Merkmalsdatenbank 8 wird dann entweder direkt die so gewonnene Positions- und Lageinformation genutzt oder es wird eine Initialisierung von außen vorgegeben.

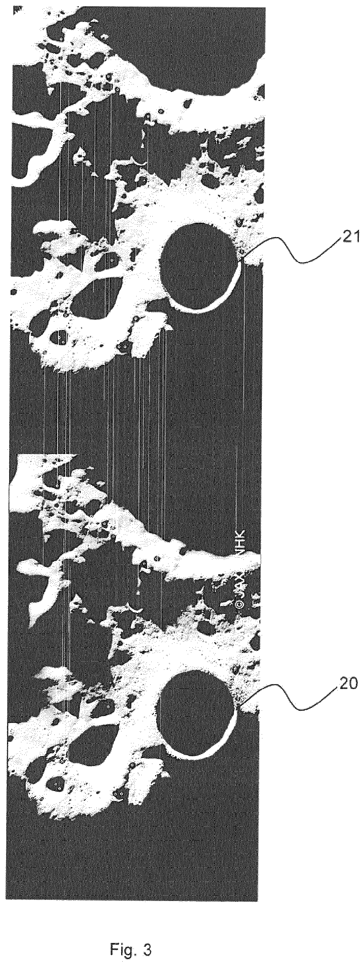

Die Fig. 3 zeigt ein Beispiel der Wiedererkennung von Merkmalen zwischen einem realen Kamerabild eines Mondkraters 20, im linken Bildteil dargestellt, und einem künstlich erzeugten Bild desselben Mondkraters 21, im rechten Bildteil dargestellt. In diesem Bildpaar wurde der SURF-Merkmalsdetektor verwendet, der rotations- und skalierungsinvariant ist, d.h., dass unter Rotation und Skalierung des Bildes dennoch die gleichen Merkmalsvektoren bestimmt werden. Allerdings ist dieser Extraktor nicht unabhängig von den Beleuchtungsbedingungen. Das dieser Operator trotzdem verwendet werden kann, liegt daran, dass gemäß der Erfindung eine Modelldatenbank mit Hilfe von computergrafischen Methoden generiert wird, die die voraussichtlichen Beleuchtungsbedingungen vorweg nehmen und in die Merkmalsdatenbank mit einfließen. Dadurch kann im Prinzip jeder beliebige Merkmalsextraktor verwendet werden!

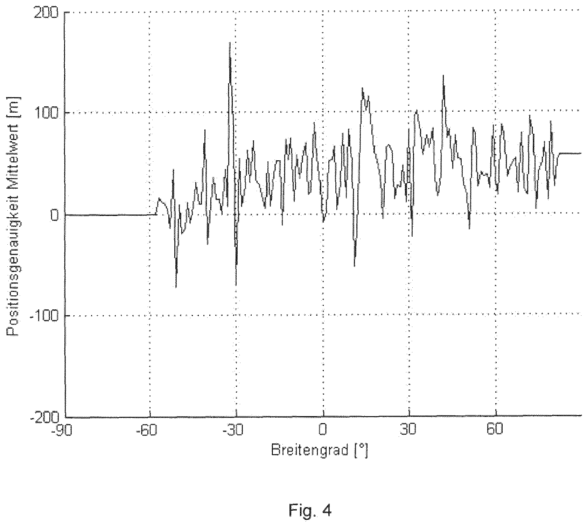

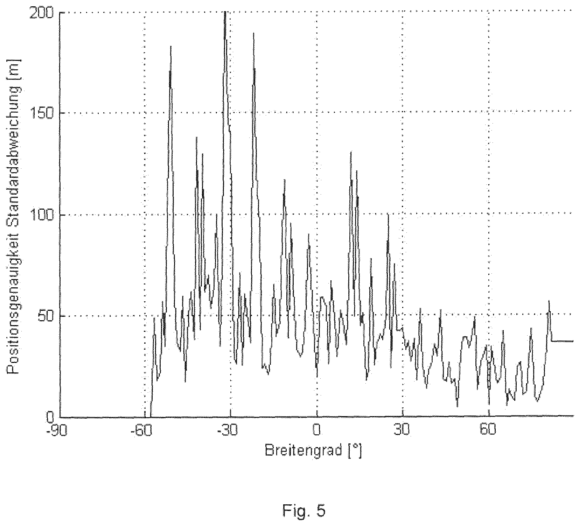

Abschließend ist in den Figuren 4 und 5 dargestellt, wie das Verfahren anhand der Trajektorien für eine simulierte Mondlandung erprobt und getestet wurde. Dabei wurden sowohl eine reine Simulationen als auch Vergleiche zwischen realen und virtuellen Bildern verwendet. Die in den Figuren 4 und 5 dargestellten Kurven zeigen die erreichten Genauigkeiten für einen Abstieg einer simulierten Mondlandefähre von ca. 100 km Höhe auf ca. 5 km Höhe. Dargestellt sind in den Figuren 4 und 5 die jeweils im Test erreichten mittleren Positioniergenauigkeiten und die zugehörigen Standardabweichungen. Diese Tests mit realen Kamerabildsequenzen wurden in einer robotischen Testanlage vor einem Modell einer Mondoberfläche im Maßstab 1:50000 durchgeführt.

## Patentansprüche

1. Verfahren zur Positions- und Lagebestimmung einer Kamera gegenüber einer topographischen Karte, **dadurch gekennzeichnet,**
**dass** in einem Offline-Prozess aus bestehenden topografischen Karten eine Merkmalsdatenbank (8) erstellt wird, wobei mit computergrafischen Methoden virtuelle Referenzbilder einer erwarteten Situation erzeugt werden, die mittels einer Merkmalsextraktion (11) analysiert werden, und wobei daraus die Merkmalsdatenbank (8) aus sichtbasierten Merkmalsvektoren und den dazugehörigen 3D-Koordinaten der lokalisierten Merkmale abgeleitet wird und
**dass** die Merkmalsdatenbank (8) anschließend in einem Online-Prozess zur Erkennung gesichteter Merkmale verwendet wird.

2. Verfahren nach Anspruch 1, **dadurch gekennzeichnet, dass** es an Bord eines Flugsystems zum Einsatz kommt.

3. Verfahren nach Anspruch 2, **dadurch gekennzeichnet, dass** die sichtbasierten Merkmalsvektoren und die dazugehörigen 3D-Koordinaten in Form einer Modelldatenbank (8) in dem Flugsystem hinterlegt werden und dass eine Navigation in der Nähe einer Referenztrajektorie und bei einer geplanten Beleuchtungssituation (3) erfolgt.

4. Verfahren nach einem der Ansprüche 1 bis 3, **dadurch gekennzeichnet, dass** die virtuellen Referenzbilder (6) eine Sequenz umfassen, bei der zu jedem Pixel eine korrespondierende 3D-Koordinate in einem Referenzkoordinatensystem hinterlegt wird.

## Claims

1. A method for determining the position and orientation of a camera in respect of a topographical map, **characterized in that**
as part of an offline process a feature database (8) is generated from existing topographical maps, wherein computer-graphical models are used to produce virtual reference images of an anticipated situation, which images are analysed by means of feature extraction (11), and wherein the feature database (8) from this is derived from sight-based feature vectors and the associated 3D coordinates of the localized features and
the feature database (8) is then used in an online process to identify features that have been seen.

2. The method according to claim 1, **characterized in that** it is used on board a flight system.

3. The method according to claim 2, **characterized in that** the sight-based feature vectors and the associated 3D coordinates are stored in the flight system in the form of a model database (8) and that navigation takes place close to a reference trajectory and with a planned lighting situation (3).

4. The method according to one of claims 1 to 3, **characterized in that** the virtual reference images (6) comprise a sequence in which for each pixel a corresponding 3D coordinate is stored in a reference coordinate system.

## Revendications

1. Procédé, destiné à déterminer la position et l'emplacement d'une caméra par rapport à une carte topographique, **caractérisé**
**en ce que** dans un processus hors ligne, on établit à partir de cartes topographiques existantes une base de données de caractéristiques (8), avec des méthodes informatiques graphiques, des images de références virtuelles d'une situation attendue étant créées, qui sont analysées au moyen d'une extraction de caractéristiques (11) et à partir de celles-ci, la base de données de caractéristiques (8) étant déduite de vecteurs de caractéristiques basés sur la vision et des coordonnées en 3D correspondantes des caractéristiques localisées et
**en ce qu'**on utilise ensuite la base de données de caractéristiques (8) dans un processus en ligne pour identifier des caractéristiques visualisées.

2. Procédé selon la revendication 1, **caractérisé en ce qu'**il est utilisé à bord d'un système de vol.

3. Procédé selon la revendication 2, **caractérisé en ce que** les vecteurs de caractéristiques basés sur la vision et les coordonnées en 3D correspondantes sont sauvegardées dans le système de vol sous la forme d'un modèle de base de données (8) et **en ce qu'**il s'effectue une navigation à proximité d'une trajectoire de référence et dans une situation d'éclairage (3) planifiée.

4. Procédé selon l'une quelconque des revendications 1 à 3, **caractérisé en ce que** les images de référence virtuelles (6) comprennent une séquence, lors de laquelle pour chaque pixel, une coordonnée en 3 D correspondante est sauvegardée dans un système de coordonnées de référence.
